# EUROPEAN PATENT APPLICATION

(11) **EP 4 775 295 A1**
(43) Date of publication of application: **15.07.2026**
(21) Application number: 24879527.0
(22) Date of filing: 26.09.2024
(51) Int. Cl.: B01D 53/14, B01D 53/62, B01D 53/78, C01B 32/50

(54) **REGENERATION TOWER, CONTROL DEVICE, AND CONTROL METHOD**

(30) Priority: 18.10.2023 JP 2023179904
(71) Applicant: Mitsubishi Heavy Industries, Ltd., Chiyoda-ku Tokyo 100-8332 (JP)
(72) Inventor: IDO, Tatsuya, Tokyo 100-8332 (JP); NAKAGAWA, Yosuke, Tokyo 100-8332 (JP); MIYAMOTO, Osamu, Tokyo 100-8332 (JP); NAKAYAMA, Koji, Tokyo 108-8015 (JP)
(74) Representative: Studio Torta S.p.A.
(86) International application number: PCT/JP2024/034430
(87) International publication number: WO 2025/084101

(57) **Abstract**

What is provided is a method of stabilizing control of a CO₂ recovery device including a regeneration tower provided with a thermosiphon section. A regeneration tower of a CO₂ recovery device includes: a first regeneration section configured to store an absorbent solution supplied to the regeneration tower from an absorption tower of the CO₂ recovery device and a second regeneration section provided below the first regeneration section; and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and in the piping that constitutes the thermosiphon section, the volume of piping arranged in a horizontal direction and provided within a range in which a liquid level of the absorbent solution fluctuates in piping arranged in a liquid-phase portion upstream of the heat exchanger is smaller than the volume by which the absorbent solution stored in the second regeneration section is permitted to fluctuate.

## Description

### TECHNICAL FIELD

The present disclosure relates to a regeneration tower, a control device, and a control method. Priority is claimed on Japanese Patent Application No. 2023-179904, filed October 18, 2023, the content of which is incorporated herein by reference.

### BACKGROUND ART

A CO₂ recovery device circulates an absorbent solution between a regeneration tower and an absorption tower and recovers CO₂ from an exhaust gas discharged from a boiler, a gas turbine, and the like. As the regeneration tower, there is provided a regeneration tower including a plurality of stages of regeneration sections in an up-down direction and configured to supply an absorbent solution stored in a regeneration section on an upper stage side to a regeneration section on a lower stage side in order to efficiently regenerate the absorbent solution. For example, according to Patent Document 1, each stage of a regeneration section includes, in order from the top, a solution distribution section, a packed section, and a tray section, and the absorbent solution is introduced into the regeneration section through the solution distribution section and supplied to the underlying packed section. During its downward flow through the packed section, CO₂ is released from the absorbent solution, and the absorbent solution from which CO₂ has been released falls onto the tray section. In general, in order to supply the absorbent solution stored in the regeneration section on the upper stage side to the regeneration section on the lower stage side, the absorbent solution is transported by a pump, and the flow rate of the absorbent solution is controlled by a flow rate control valve. In contrast, Patent Document 1 discloses a configuration in which a supply piping that guides the absorbent solution stored in the tray section of a first regeneration section on the upper stage side to the solution distribution section provided in an upper portion of a second regeneration section on the lower stage side is provided, and a heat exchanger is provided in the supply piping. With this configuration, the absorbent solution can circulate from the tray section to the solution distribution section of the second regeneration section, and the absorbent solution can be supplied to the second regeneration section by using a density difference between the absorbent solution upstream of the heat exchanger and the absorbent solution downstream of the heat exchanger as a driving force (thermosiphon effect). According to the technology of Patent Document 1, the absorbent solution can be supplied from the first regeneration section on the upper stage side to the second regeneration section on the lower stage side without using the pump. Hereinafter, the supply piping for the absorbent solution, which is provided to supply the absorbent solution from the regeneration section on the upper stage side to the regeneration section on the lower stage side and includes the heat exchanger, may be referred to as a thermosiphon section.

### Citation List

### Patent Document

Patent Document 1: Japanese Patent No. 5968450

### SUMMARY OF INVENTION

### Technical Problem

When a load of the CO₂ recovery device fluctuates, the flow rate of the absorbent solution circulating through the supply piping (thermosiphon section) fluctuates. When the flow rate of the absorbent solution fluctuates, the control of the CO₂ recovery device may become unstable, such as the liquid level of the absorbent solution stored at the bottom of the regeneration tower exceeding an allowable range.

The present disclosure provides a regeneration tower, a control device, and a control method capable of addressing the above-described issues.

### Solution to Problem

An aspect of the present disclosure relates to a regeneration tower of a CO₂ recovery device, including: a first regeneration section configured to store an absorbent solution supplied to the regeneration tower from an absorption tower of the CO₂ recovery device and a second regeneration section provided below the first regeneration section; and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and in the piping that constitutes the thermosiphon section, the volume of piping arranged in a horizontal direction and provided within a range in which a liquid level of the absorbent solution fluctuates in piping arranged in a liquid-phase portion upstream of the heat exchanger is smaller than the volume by which the absorbent solution stored in the second regeneration section is permitted to fluctuate.

Another aspect of the present disclosure relates to a control device of a CO₂ recovery device including the regeneration tower described above, and an absorption tower, in which based on a first model representing a relationship among fluctuation of a liquid level in the thermosiphon section, a first flow rate that is the flow rate of the absorbent solution supplied from the absorption tower to the regeneration tower and that is based on a valve opening of a first flow rate control valve configured to control the first flow rate, and a circulation flow rate of the absorbent solution that flows through the thermosiphon section, and a second model representing a relationship among fluctuation of a tower-bottom liquid level that is a liquid level of the absorbent solution stored in the second regeneration section, a second flow rate that is the flow rate of the absorbent solution supplied from the regeneration tower to the absorption tower and that is based on a valve opening of a second flow rate control valve configured to control the second flow rate, and the circulation flow rate, the control device calculates the valve opening of the first flow rate control valve and the second flow rate control valve that optimize the liquid level in the thermosiphon section such that the tower-bottom liquid level is maintained constant.

Still another aspect of the present disclosure relates to a control method of a CO₂ recovery device including a regeneration tower including a first regeneration section configured to store an absorbent solution supplied to the regeneration tower from an absorption tower of the CO₂ recovery device and a second regeneration section provided below the first regeneration section, and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and the absorption tower, the control method including: based on a first model representing a relationship among fluctuation of a liquid level in the thermosiphon section, a first flow rate that is the flow rate of the absorbent solution supplied from the absorption tower to the regeneration tower and that is based on a valve opening of a first flow rate control valve configured to control the first flow rate, and a circulation flow rate of the absorbent solution that flows through the thermosiphon section, and a second model representing a relationship among fluctuation of a tower-bottom liquid level that is a liquid level of the absorbent solution stored in the second regeneration section, a second flow rate that is the flow rate of the absorbent solution supplied from the regeneration tower to the absorption tower and that is based on a valve opening of a second flow rate control valve configured to control the second flow rate, and the circulation flow rate, calculating the valve opening of the first flow rate control valve and the second flow rate control valve that optimize the liquid level in the thermosiphon section such that the tower-bottom liquid level is maintained constant, and controlling the first flow rate control valve and the second flow rate control valve with the calculated valve opening.

### Advantageous Effects of Invention

With the regeneration tower, the control device, and the control method described above, it is possible to stabilize the control of the CO₂ recovery device including the regeneration tower provided with the thermosiphon section.

### BRIEF DESCRIPTION OF DRAWINGS

[FIG. 1] A schematic diagram showing an example of a CO₂ recovery device according to an embodiment.
[FIG. 2] A diagram showing an example of a general thermosiphon section.
[FIG. 3A] A first diagram showing a configuration example of a thermosiphon section according to a first embodiment.
[FIG. 3B] A second diagram showing a configuration example of the thermosiphon section according to the first embodiment.
[FIG. 4] A diagram showing a method of calculating a fluctuation range of a liquid level and the like according to the first embodiment.
[FIG. 5] A diagram showing an example of a mathematical model according to a second embodiment.
[FIG. 6] A flowchart showing an example of control according to the second embodiment.
[FIG. 7] A flowchart showing an example of control according to a third embodiment.
[FIG. 8] A diagram showing a setting example of a flow rate set value according to an operation load according to a fourth embodiment.
[FIG. 9] A flowchart showing an example of control according to the fourth embodiment.
[FIG. 10] A diagram showing an example of a hardware configuration of a control device according to each embodiment.

### DESCRIPTION OF EMBODIMENTS

Hereinafter, a CO₂ recovery device according to the present disclosure will be described with reference to the accompanying drawings.

### <First Embodiment>

### (Configuration)

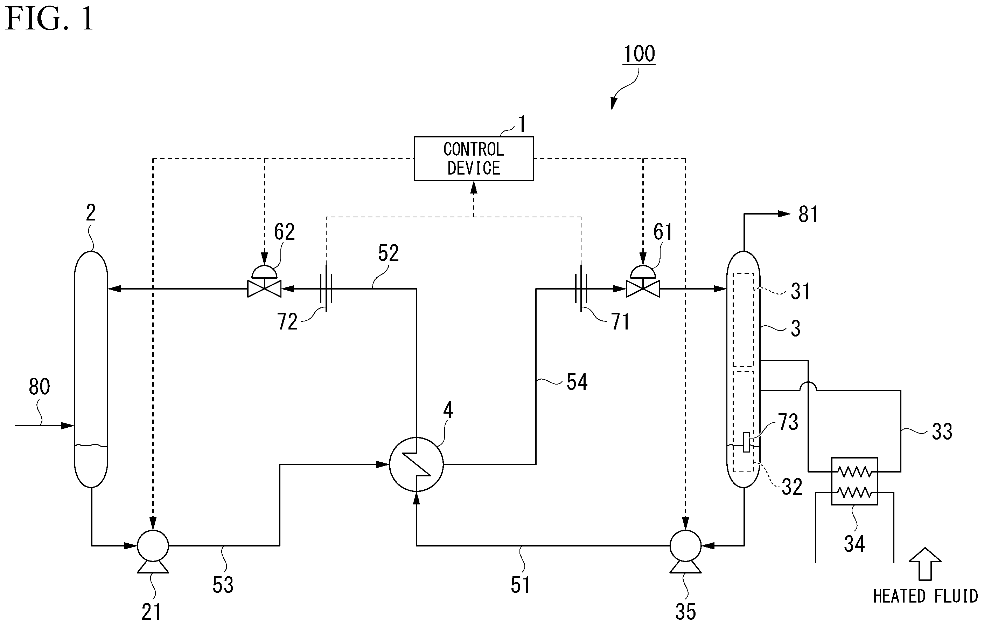

FIG. 1 shows an example of a schematic configuration of a CO₂ recovery device 100 according to each embodiment. The CO₂ recovery device 100 includes, as shown in FIG. 1, a control device 1, an absorption tower 2, a regeneration tower 3, a heat exchanger 4, and the like. An exhaust gas 80 discharged from industrial combustion equipment such as a boiler or a gas turbine is cooled and then sent to the absorption tower 2 of the CO₂ recovery device 100. In the absorption tower 2, the exhaust gas 80 comes into contact with an absorbent solution, and CO₂ in the exhaust gas 80 is absorbed into the absorbent solution by a chemical reaction. The absorbent solution that has absorbed CO₂ is referred to as a rich solution. The exhaust gas 80 from which CO₂ has been removed in the absorption tower 2 is released to the outside of the system. The rich solution is pressurized by a pump 21 and then sent to the heat exchanger 4 through piping 53. The rich solution is heated by a lean solution having a higher temperature than the rich solution, which is regenerated in the regeneration tower 3, in the heat exchanger 4, and then supplied to the regeneration tower 3 through piping 54.

The rich solution supplied to the regeneration tower 3 is supplied from an upper portion of the regeneration tower 3 to the inside of the regeneration tower 3. The rich solution releases CO₂ by an endothermic reaction inside the regeneration tower 3. For example, the regeneration tower 3 includes a first regeneration section 31 on an upper stage side and a second regeneration section 32 on a lower stage side, and the rich solution is first supplied to the first regeneration section 31 and then releases CO₂ in the first regeneration section 31. The rich solution is supplied from the first regeneration section 31 to the second regeneration section 32 through piping 33 that connects a lower portion of the first regeneration section 31 and an upper portion of the second regeneration section 32, and then further releases CO₂ in the second regeneration section 32. A heat exchanger 34 is provided in the piping 33, and a heated fluid and the absorbent solution flowing through the piping 33 exchange heat in the heat exchanger 34. As a result, the absorbent solution flowing through the piping 33 is heated. As the heated fluid passing through the heat exchanger 34, a lean absorbent solution, steam condensate, exhaust gas, CO₂, or the like in the CO₂ recovery device 100 can be used. When the absorbent solution passes through the heat exchanger 34, the temperature rises, and a portion of CO₂ becomes gaseous. Therefore, the heated absorbent solution has a lower density than a state before passing through the heat exchanger 34 (a state before being heated), and when the heated absorbent solution exits the heat exchanger 34, the heated absorbent solution rises to a position higher than the heat exchanger 34. Thereafter, the absorbent solution is supplied to the upper portion of the second regeneration section 32 along a piping line of the piping 33. The piping 33 shown in FIG. 1 is an example of a thermosiphon section. The rich solution supplied to the second regeneration section through the piping 33 (thermosiphon section) becomes the lean solution, which is an absorbent solution from which almost all CO₂ has been removed, when the rich solution reaches a lower portion of the regeneration tower 3 (a lower portion of the second regeneration section 32). The lean solution is pressurized by a pump 35 and then sent to the heat exchanger 4 through piping 51. The lean solution sent to the heat exchanger 4 through the piping 51 is cooled by the rich solution in the heat exchanger 4 and then supplied to the absorption tower 2 through piping 52. In this way, the absorbent solution circulates between the absorption tower 2 and the regeneration tower 3. A CO₂ gas 81 accompanied by water vapor released from the rich solution in the regeneration tower 3 is led out from the upper portion of the regeneration tower 3.

A rich solution control valve 61 is provided in the piping 54. The control device 1 controls an opening of the rich solution control valve 61 to control an amount of the rich solution sent to the regeneration tower 3 per unit time. A lean solution control valve 62 is provided in the piping 52. The control device 1 controls an opening of the lean solution control valve 62 to control an amount of the lean solution sent to the absorption tower 2 per unit time. The liquid level position (referred to as a tower-bottom liquid level of the regeneration tower 3) of the lean solution stored in the lower portion of the regeneration tower 3 is determined by the balance between the flow rate of the absorbent solution supplied from the piping 33 to the second regeneration section and the flow rate of the lean solution flowing out from the bottom of the regeneration tower 3. The flow rate of the absorbent solution supplied from the piping 33 to the second regeneration section is affected by the flow rate of the rich solution flowing into the regeneration tower 3. For example, when the flow rate of the rich solution flowing into the regeneration tower 3 increases, the flow rate of the absorbent solution supplied to the second regeneration section through the piping 33 increases, and when the flow rate of the lean solution flowing out from the bottom of the tower does not change, the tower-bottom liquid level of the regeneration tower 3 increases.

A pump 21 that sends the rich solution is provided in the piping 53. The control device 1 controls the pump 21 to pump the rich solution stored in the lower portion of the absorption tower 2 to the heat exchanger 4 and the regeneration tower 3 side. The pump 35 that sends the lean solution is provided in the piping 51. The control device 1 controls the pump 35 to pump the lean solution stored in the lower portion of the regeneration tower 3 to the heat exchanger 4 and the absorption tower 2 side. The control device 1 acquires information such as the flow rate of the lean solution per unit time measured by the flow meter 71, the flow rate of the rich solution per unit time measured by the flow meter 72, the load (output) of the industrial combustion equipment such as a boiler or a gas turbine, and the tower-bottom liquid level of the regeneration tower 3, and controls the pump 21, the pump 35, the opening of the rich solution control valve 61, the lean solution control valve 62, and the like such that the tower-bottom liquid level of the regeneration tower 3 falls within a predetermined range, based on the acquired information. The information on the tower-bottom liquid level of the regeneration tower 3 may be predicted by a mathematical model together with the information on the liquid level of inlet piping of the piping 33 (thermosiphon section) (may be referred to as an inlet side liquid level) (second embodiment), or a liquid level gauge 73 that measures the tower-bottom liquid level may be provided, and the measurement value measured by the liquid level gauge 73 may be acquired (third embodiment).

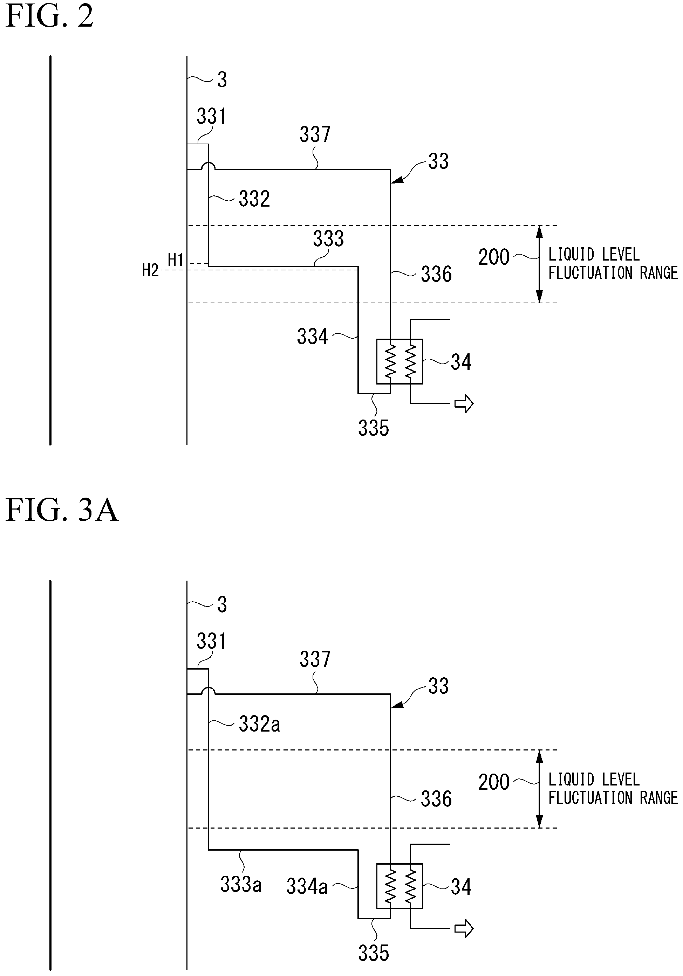

FIG. 2 shows an example of a general thermosiphon section. The piping 33 (thermosiphon section) shown in FIG. 2 includes horizontal piping 331, vertical piping 332, horizontal piping 333, vertical piping 334, horizontal piping 335, vertical piping 336, and horizontal piping 337. Here, the liquid level on the inlet side of the absorbent solution flowing through the piping 33 (the liquid level of the absorbent solution in the piping 332 disposed in the liquid-phase portion upstream of the heat exchanger 34 among the piping constituting the thermosiphon section) fluctuates depending on the operation load of the CO₂ recovery device 100. A range of this fluctuation is referred to as a liquid level fluctuation range 200 shown in FIG. 2. In the configuration example of FIG. 2, the horizontal piping 333 is included in the liquid level fluctuation range 200. Then, during the liquid level fluctuation across the horizontal piping 333, that is, in a time zone in which the liquid level changes between H1 slightly higher than the horizontal piping 333 and H2 slightly lower than the horizontal piping 333, a holdup of the absorbent solution in the horizontal piping 333 changes, but the liquid level on the inlet side of the piping 33 does not change, and thus a head difference between the inlet side and the outlet side does not change, and the change in the circulation flow rate of the absorbent solution circulating through the piping 33 is temporarily stopped, resulting in a dead time in control. More specifically, for example, in a case where the magnitude of the operation load of the CO₂ recovery device is in a load range in which the liquid level is between H1 and H2, even when the opening of the rich solution control valve 61 or the like is changed in an attempt to control the tower-bottom liquid level of the regeneration tower 3 within an appropriate range, the amount of the absorbent solution held by the horizontal piping 333 changes, but the head on the inlet side of the piping 33 does not change, and during a period until the head changes (during a period until the liquid level becomes higher than H1 or lower than H2), the change in the opening of the rich solution control valve 61 or the like does not affect the change in the circulation flow rate of the absorbent solution circulating through the piping 33, and the control of the tower-bottom liquid level of the regeneration tower 3 by the opening control of the rich solution control valve 61 or the like may not be as expected.

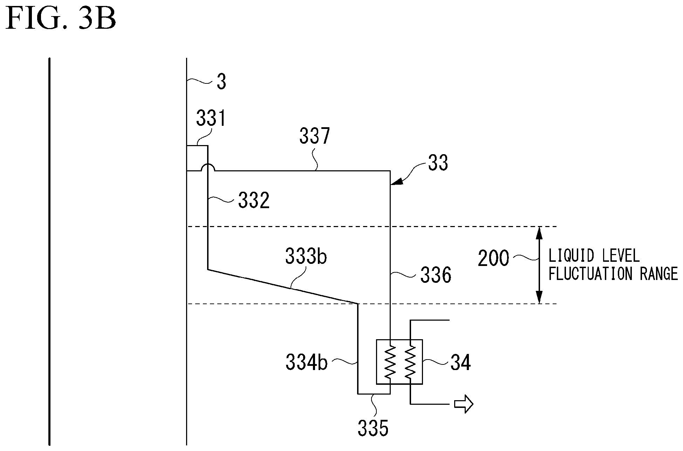

Therefore, in the present embodiment, (1) in a range of a normal operation load of the CO₂ recovery device, the head (liquid level) of the inlet piping of the piping 33 (thermosiphon section) is calculated in advance from the balance of the absorbent solution flow rate, temperature, and pressure, and a configuration is adopted in which the horizontal piping is not provided in the fluctuation range (the vertical piping is desirable, but piping having an inclination disposed in an inclined direction with respect to the vertical direction may be adopted). FIGS. 3A and 3B show examples of such a configuration. The configuration example of FIG. 3A is a configuration in which, based on the configuration shown in FIG. 2, the vertical piping 332a extends downward, the vertical piping 334a is shortened by the same amount, and the horizontal piping 333a is provided outside (below) the liquid level fluctuation range 200, so that a horizontal portion is not included in the liquid level fluctuation range 200. The configuration shown in FIG. 3B is a configuration in which, based on the configuration shown in FIG. 2, the horizontal piping 333 in FIG. 3 is changed to piping 333b having an inclination, and the length of the vertical piping 334 is adjusted to form vertical piping 334b. Although the configuration of FIG. 3A is more preferable, for example, by adopting the configuration as shown in FIGS. 3A and 3B, it is possible to avoid a situation in which the head on the inlet side of the piping 33 does not change and the change in the liquid circulation flow rate is stopped during the liquid level fluctuation across the horizontal piping 333.

Alternatively, (2) even when the horizontal piping is installed in the liquid level fluctuation range, by reducing the volume thereof, it is possible to reduce the influence of the situation in which the head on the inlet side of the piping 33 does not change and the change in the circulation flow rate of the absorbent solution is stopped during the liquid level fluctuation across the horizontal piping 333. For example, when a cross sectional area of the bottom of the regeneration tower 3 is A and a fluctuation width (management target range) of the tower-bottom liquid level of the regeneration tower 3 at a normal load is denoted by ΔL, the horizontal piping is provided such that the volume of the horizontal piping (for example, the horizontal piping 333 in FIG. 2) provided to be included in the liquid level fluctuation range 200 is smaller than A × ΔL. Assuming ideal flow without delay except for the horizontal piping, the time during which the absorbent solution is held in the horizontal piping portion without a change in the head is the dead time, and the volume thereof appears as the fluctuation in the tower-bottom liquid level of the regeneration tower 3. Therefore, by making the volume of the horizontal piping portion smaller than A × ΔL, it is possible to suppress the influence of the holdup of the absorbent solution in the horizontal piping on the tower-bottom liquid level of the regeneration tower 3 within the management target range.

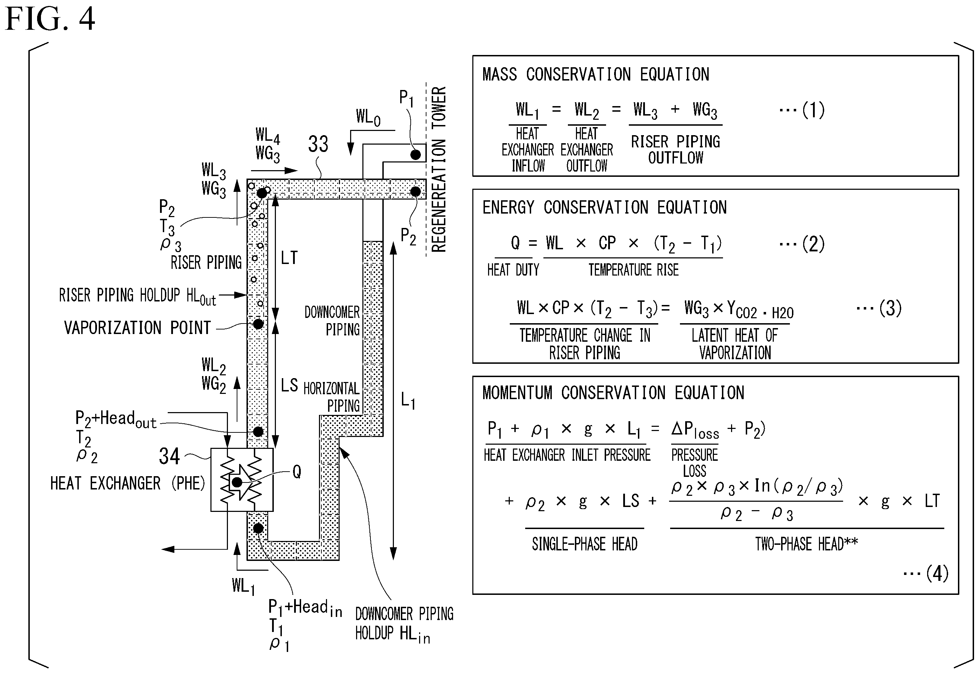

Next, a method of calculating the liquid level fluctuation range 200 will be described with reference to FIG. 4. In the piping 33 (thermosiphon section) shown in FIG. 4, WL₁ denotes the flow rate of the absorbent solution flowing into the heat exchanger 34, WL₂ denotes the flow rate of the absorbent solution flowing out from the heat exchanger 34, WL₃ denotes the flow rate of the absorbent solution flowing through the riser piping (in the configuration of FIG. 3, the piping 336), and WG₃ denotes the flow rate of the gas such as CO₂ flowing through the riser piping. In this case, the mass conservation equation of Equation (1) in FIG. 4 is established. When Q denotes an amount of heat transferred from the heated fluid to the absorbent solution in the heat exchanger 34, CP denotes specific heat of the absorbent solution, WL denotes WL₁ or WL₂ described above, T₂ denotes the temperature of the absorbent solution at the outlet of the heat exchanger 34, and T₁ denotes the temperature of the absorbent solution at the inlet of the heat exchanger 34, the energy conservation equation of Equation (2) in FIG. 4 is established.

When WL denotes WL₃ described above, T₂ and T₃ denote the temperature of the absorbent solution at the outlet of the heat exchanger 34 and the temperature of the absorbent solution in the riser piping, respectively, and Y_{CO2H2O} denotes the latent heat of vaporization of the gas flowing through the riser piping, the energy conservation equation of Equation (3) in FIG. 4 is established. When P₁ denotes the pressure of the absorbent solution at the inlet of the heat exchanger 34, ρ₁ denotes the density of the absorbent solution at the inlet of the heat exchanger 34, g denotes the gravitational acceleration, L₁ denotes the liquid level, ρ₂ denotes the density of the absorbent solution in the single-phase section (portion of only the absorbent solution) after the outlet of the heat exchanger 34, LS denotes the liquid level of the single-phase section in the riser piping with reference to the outlet of the heat exchanger 34, ρ₃ denotes the density of the two-phase section of the absorbent solution and the gas from the end point of the single-phase section in the riser to the uppermost portion of the riser with reference to the end point of the single-phase section in the riser, and LT denotes the height from the end point of the single-phase section in the riser to the uppermost portion of the riser with reference to the end point of the single-phase section in the riser, the momentum conservation equation of Equation (4) in FIG. 4 is established. When various parameters are substituted into these static balance calculation equations (1) to (4), the liquid level L₁ can be calculated. Therefore, the liquid level fluctuation range 200 can be calculated by substituting the values of various parameters at the minimum operation load and the maximum operation load of the CO₂ recovery device 100 into Equations (1) to (4) and calculating the liquid level at the minimum operation load and the maximum operation load. By calculating the liquid level fluctuation range 200 during the design of the CO₂ recovery device 100 and configuring the piping 33 such that the horizontal piping is not included in this range, it is possible to avoid the temporary stop of the change in the circulation flow rate of the absorbent solution caused by the horizontal piping. Alternatively, by making the volume of the horizontal piping provided in the liquid level fluctuation range 200 smaller than A × ΔL, it is possible to reduce the influence of the temporary stop of the change in the circulation flow rate of the absorbent solution. The method of calculating the liquid level fluctuation range 200 described here is merely an example. For example, the liquid level fluctuation range 200 may be estimated with reference to experiments, past performance data, or the like.

### (Effects)

As described above, according to the first embodiment, it is possible to avoid or reduce the occurrence of the dead time in control due to the temporary stop of the change in the circulation flow rate of the absorbent solution in the thermosiphon section due to the fluctuation in the liquid level of the thermosiphon section, and to stabilize the control of the CO₂ recovery device.

Hereinafter, the control of the second embodiment to the fourth embodiment will be described on the premise of the configuration of the first embodiment. By adopting the configuration of the first embodiment for the thermosiphon section of the regeneration tower 3, for example, it is possible to eliminate the instability in control due to the fluctuation in the liquid level of the thermosiphon section at the normal operation load of the CO₂ recovery device, but when the operation load becomes the load during an unsteady state, the same problem may occur. In order to reduce the influence of the temporary stop of the change in the circulation flow rate of the absorbent solution due to the liquid level of the thermosiphon section, which occurs at the operation load during an unsteady state, it is effective to combine the control of the second embodiment to the fourth embodiment described below. The control of the second embodiment to the fourth embodiment is also effective even in a case where the configuration of the first embodiment is not adopted for the thermosiphon section of the regeneration tower 3.

### <Second Embodiment>

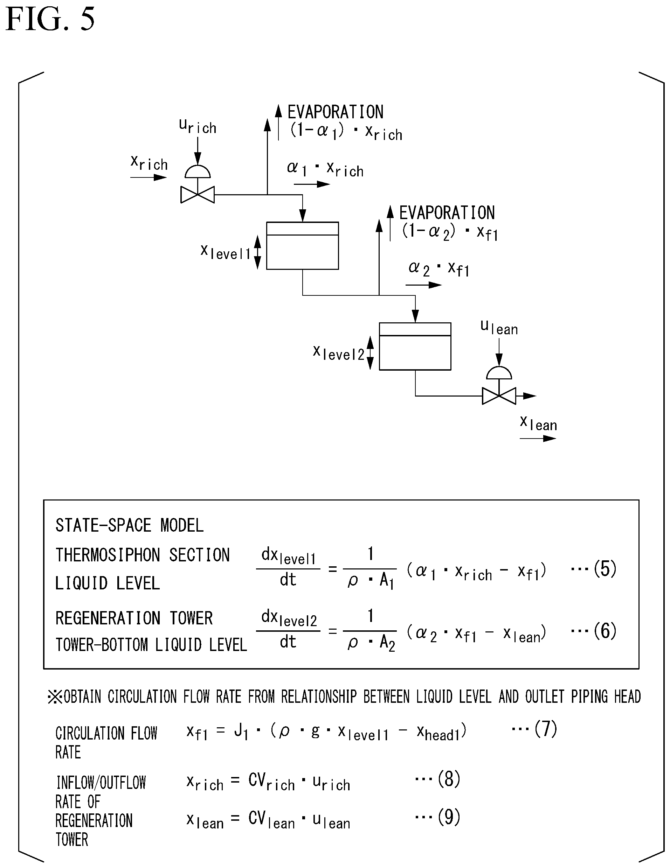

In the second embodiment, the control is performed to keep the fluctuation in the tower-bottom liquid level of the regeneration tower 3 within the management target range. The control device 1 represents a relationship among the inflow rate of the absorbent solution flowing into the regeneration tower 3, the outflow rate of the absorbent solution flowing out from the regeneration tower 3, the tower-bottom liquid level of the regeneration tower 3, the inflow rate of the absorbent solution into the thermosiphon section, the outflow rate of the absorbent solution from the thermosiphon section, and the liquid level of the absorbent solution in the inlet piping of the thermosiphon section as a mathematical model, and simulates the liquid level fluctuation (head difference) on the inlet side of the thermosiphon section and the tower-bottom liquid level fluctuation of the regeneration tower 3. An example of the mathematical model representing relationship among these is shown in FIG. 5. When xₗₑᵥₑₗ₁ denotes the liquid level of the thermosiphon section, xₗₑᵥₑₗ₂ denotes the tower-bottom liquid level of the regeneration tower 3, x_{head} denotes the head of the outlet piping (piping 336 and piping 337 in FIG. 2) of the thermosiphon section, ρ denotes the density of the absorbent solution, x_{rich} denotes the inflow rate of the absorbent solution flowing into the regeneration tower 3, xₗₑₐₙ denotes the outflow rate of the absorbent solution flowing out from the regeneration tower 3, x_{f1} denotes the outflow rate of the absorbent solution from the thermosiphon section to the second regeneration section 32, u_{rich} denotes the opening of the rich solution control valve 61, uₗₑₐₙ denotes the opening of the lean solution control valve 62, CV_{rich} denotes a proportional constant indicating the relationship between the valve opening and the flow rate of the rich solution control valve 61, CVₗₑₐₙ denotes a proportional constant indicating the relationship between the valve opening and the flow rate of the lean solution control valve 62, a₁ denotes the proportion of the absorbent solution that reaches the bottom surface of the first regeneration section 31 without being vaporized after flowing into the regeneration tower 3, a₂ denotes the proportion of the absorbent solution that reaches the bottom surface of the second regeneration section 32 without being vaporized after flowing into the second regeneration section 32, g denotes the gravitational acceleration, A₁ denotes the cross sectional area of the thermosiphon section, A₂ denotes the cross sectional area of the regeneration tower 3, and J₁ denotes a predetermined constant corresponding to the head difference between the inlet side and the outlet side of the thermosiphon section, Equations (5) to (9) in FIG. 5 are established. Equations (5) to (9) are the mathematical models described above. Equation (5) is a state-space model representing the liquid level fluctuation on the inlet side of the thermosiphon section per unit time, and Equation (6) is a state-space model representing the tower-bottom liquid level fluctuation of the regeneration tower 3 per unit time. The tower-bottom liquid level of the regeneration tower 3 is likely to deviate from the management target range when the operation load of the CO₂ recovery device 100 is during an unsteady state. For example, the control device 1 searches for the opening u_{rich} of the rich solution control valve 61 and the opening uₗₑₐₙ of the lean solution control valve 62 such that the tower-bottom liquid level of the regeneration tower 3 is maintained constant, using the mathematical model, and controls each valve at the searched opening . In this case, the tower-bottom liquid level of the regeneration tower 3 may be determined only by the inflow rate x_{rich} into the regeneration tower 3 and the outflow rate xₗₑₐₙ from the regeneration tower 3, but in the regeneration tower 3 having the thermosiphon section, the circulation flow rate of the absorbent solution in the thermosiphon section affects the tower-bottom liquid level of the regeneration tower 3. For example, the temporary stop of the change in the circulation amount of the absorbent solution in the thermosiphon section has a significant impact on the tower-bottom liquid level. Therefore, for example, the liquid level or the circulation flow rate of the thermosiphon section is predicted by Equations (5) to (9), and the tower-bottom liquid level of the regeneration tower 3 is predicted using the prediction result. For example, the control device 1 controls the opening u_{rich} of the rich solution control valve 61 and the opening uₗₑₐₙ of the lean solution control valve 62 using a control method for optimizing the liquid level fluctuation of the thermosiphon section such that the tower-bottom liquid level of the regeneration tower 3 is maintained constant. The control method to be optimized is, for example, model predictive control, linear quadratic Gaussian, and the like, but is not limited thereto.

### (Operation)

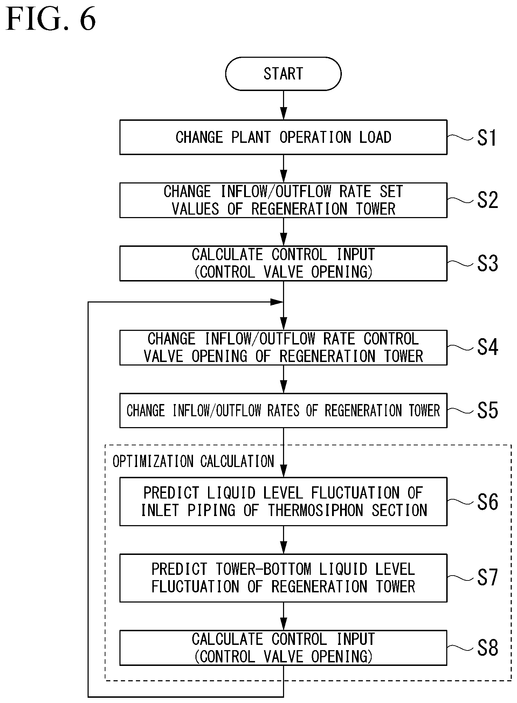

FIG. 6 shows an example of the control according to the second embodiment. The flowchart of FIG. 6 shows a flow of the control when the operation load of the CO₂ recovery device 100 becomes a value during an unsteady state.

First, the operation load of the plant (CO₂ recovery device) is changed (step S1). The set values of the inflow rate and the outflow rate of the absorbent solution with respect to the regeneration tower 3 are changed with the change in the operation load (step S2). The control device 1 calculates the inflow rate of the absorbent solution into the regeneration tower 3 and the outflow rate of the absorbent solution from the regeneration tower 3 according to the changed load. Then, the control device 1 calculates the control input with the change in the operation load (step S3). For example, the control device 1 calculates the opening u_{rich} of the rich solution control valve 61 and the opening uₗₑₐₙ of the lean solution control valve 62 in accordance with the changed operation load. The control device 1 calculates the rotational speeds of the pumps 21 and 35 in accordance with the changed operation load. Then, the valve opening of the inflow/outflow rate control valve of the regeneration tower 3 is changed (step S4). For example, the control device 1 controls the opening of each of the valves 61 and 62 to the opening u_{rich} of the rich solution control valve 61 and the opening uₗₑₐₙ of the lean solution control valve 62 calculated in step S3. The control device 1 operates the pumps 21 and 35 at the rotational speed calculated in step S3. Therefore, the inflow/outflow rate of the regeneration tower 3 is changed (step S5). The control up to this point is the same as the control in a general CO₂ recovery device. In addition to the processes of steps S1 to S5, in the present embodiment, optimization calculation using the above-described mathematical models is performed. Specifically, the control device 1 predicts the liquid level fluctuation of the inlet piping of the thermosiphon section at each moment using Equations (5), (7), and (8) (step S6). For example, the control device 1 calculates x_{rich} from the opening u_{rich} of the rich solution control valve 61 calculated in step S3 and Equation (8), substitutes the calculation result and Equation (7) into Equation (5), and sets a predetermined value for x_{head1} to generate a prediction equation of xₗₑᵥₑₗ₁ Then, the control device 1 predicts the tower-bottom liquid level fluctuation of the regeneration tower 3 at each moment using Equations (6), (7), and (9) (step S7). For example, the control device 1 calculates xₗₑₐₙ from the opening uₗₑₐₙ of the lean solution control valve 62 calculated in step S3 and Equation (9), substitutes the calculation result and Equation (7) into Equation (6), and sets a predetermined value for x_{head1} to generate a prediction equation of xₗₑᵥₑₗ₂. Then, the control device 1 calculates the control input values (the valve opening of the rich solution control valve 61 and the lean solution control valve 62) (step S8). The control device 1 calculates the valve opening of the rich solution control valve 61 and the lean solution control valve 62 such that the tower-bottom liquid level of the regeneration tower 3 is within the management target range by optimal control such as model predictive control or linear quadratic Gaussian. For example, the control device 1 searches for the opening u_{rich} of the rich solution control valve 61 and the opening uₗₑₐₙ of the lean solution control valve 62 at that time, which realize the liquid level on the inlet side of the thermosiphon section such that the tower-bottom liquid level fluctuation dxₗₑᵥₑₗ₂/dt of the regeneration tower 3 is 0, by a predetermined optimization calculation method while repeating the prediction of the liquid level fluctuation of the thermosiphon section and the prediction of the tower-bottom liquid level fluctuation of the regeneration tower 3 when the opening of the valve 61 and the valve 62 are changed, using the mathematical model of Equations (5) to (9). Next, the control device 1 controls the opening of each of the valves 61 and 62 to the opening u_{rich} of the rich solution control valve 61 and the opening uₗₑₐₙ of the lean solution control valve 62 calculated in step S8 (step S4). For example, the control is performed to decrease the regeneration tower inflow rate control valve opening when the liquid level of the thermosiphon section inlet piping is excessively high, and to increase the valve opening when the liquid level is excessively low. Therefore, the tower-bottom liquid level of the regeneration tower 3 is controlled within the management target range.

### (Effects)

As described above, according to the second embodiment, the liquid level change when the operation load is changed is predicted without measuring the liquid level of the thermosiphon section, and the fluctuation of the tower-bottom liquid level of the regeneration tower 3 resulting from the liquid level change of the thermosiphon section is predicted. The opening u_{rich} of the rich solution control valve 61 and the opening uₗₑₐₙ of the lean solution control valve 62 such that the tower-bottom liquid level of the regeneration tower 3 is constant are calculated, and the tower-bottom liquid level of the regeneration tower 3 can be stabilized by controlling each valve. In a general regeneration tower, a method of measuring the tower-bottom liquid level of the regeneration tower and controlling the inflow rate and the outflow rate of the regeneration tower 3 using the measurement result has been used so far, but in the regeneration tower 3 including the thermosiphon section, it is desirable to consider the circulation flow rate of the thermosiphon section. According to the present embodiment, the tower-bottom liquid level of the regeneration tower 3 in which the prediction of the circulation flow rate of the thermosiphon section is reflected can be predicted, and the inflow rate and the outflow rate of the absorbent solution into the regeneration tower 3 can be controlled based on the prediction. The second embodiment can also be applied to a CO₂ recovery device in which a thermosiphon section does not have the piping structure described in the first embodiment.

### <Third Embodiment>

In the third embodiment, the tower-bottom liquid level of the regeneration tower 3 is measured by the liquid level gauge 73, and the opening u_{rich} of the rich solution control valve 61 and the opening uₗₑₐₙ of the lean solution control valve 62 are controlled based on the measurement result, thereby stabilizing the tower-bottom liquid level of the regeneration tower 3. Specifically, the tower-bottom liquid level of the regeneration tower 3 is monitored, and when the operation load of the CO₂ recovery device 100 is a value in an unsteady state, it is determined that the circulation amount change of the absorbent solution in the thermosiphon section is temporarily stopped when the tower-bottom liquid level of the regeneration tower 3 exceeds a threshold upper limit or falls below a threshold lower limit, and the set value of the inflow rate or the outflow rate of the regeneration tower 3 is increased or decreased to temporarily increase or decrease the inflow rate or the outflow rate by a certain amount. For example, the control is performed to increase or decrease the inflow rate set value of the regeneration tower 3 by 5% with respect to the tower-bottom liquid level in a steady state.

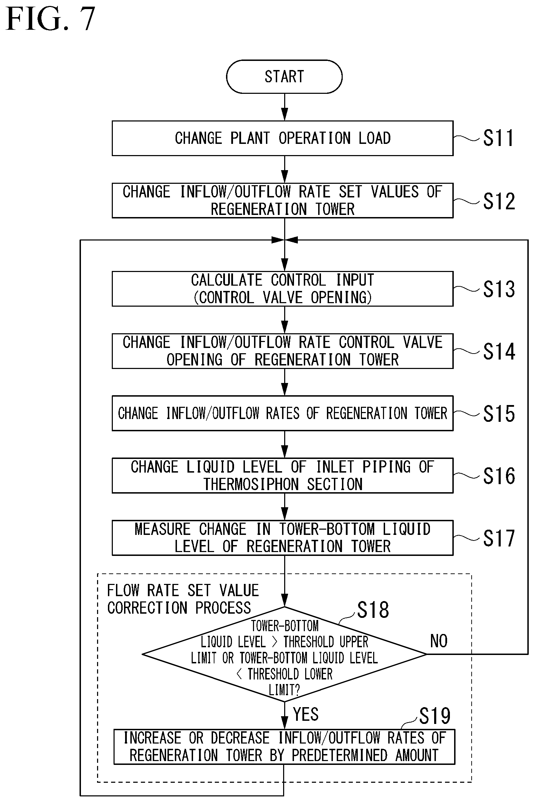

FIG. 7 shows an example of the control according to the third embodiment. The flowchart of FIG. 7 shows a flow of the control when the operation load of the CO₂ recovery device 100 is a value in an unsteady state.

First, the operation load of the plant (CO₂ recovery device) is changed (step S11). The set values of the inflow rate and the outflow rate of the absorbent solution with respect to the regeneration tower 3 change with the change in the operation load (step S12). The control device 1 calculates the set value of the inflow rate of the absorbent solution into the regeneration tower 3 and the set value of the outflow rate of the absorbent solution from the regeneration tower 3 according to the operation load after the change. For example, the control device 1 has a table or the like in which the operation load is associated with the set values of the inflow rate and the outflow rate, and calculates the set value of the inflow rate and the set value of the outflow rate based on the table. Then, the control device 1 calculates the control input with the change in the operation load (step S13). For example, the control device 1 calculates the opening u_{rich} of the rich solution control valve 61 in accordance with the operation load after the change based on the set value of the inflow rate calculated in step S12, and calculates the opening uₗₑₐₙ of the lean solution control valve 62 in accordance with the operation load after the change based on the set value of the outflow rate calculated in step S12. The control device 1 calculates the rotational speeds of the pumps 21 and 35 in accordance with the changed operation load. Then, the valve opening of the inflow/outflow rate control valve of the regeneration tower 3 is changed (step S14). For example, the control device 1 controls the opening of each of the valves 61 and 62 such that the opening u_{rich} of the rich solution control valve 61 and the opening uₗₑₐₙ of the lean solution control valve 62 calculated in step S14 are obtained. The control device 1 operates the pumps 21 and 35 at the rotational speed calculated in step S14. As a result, the inflow/outflow rate of the regeneration tower 3 is changed (step S15). The liquid level of the inlet piping of the thermosiphon section is changed (step S16). The liquid level gauge 73 measures the tower-bottom liquid level of the regeneration tower 3 (step S17), and sends the measurement value to the control device 1. The control up to this point is the same as the control in a general CO₂ recovery device. In addition to the processes of steps S11 to S17, in the present embodiment, the flow rate set value increase/decrease process is performed based on the measurement value measured by the liquid level gauge 73. For example, the control device 1 acquires the measurement value measured by the liquid level gauge 73, and compares the tower-bottom liquid level indicated by the measurement value with the threshold upper limit and the threshold lower limit. When the measurement value of the tower-bottom liquid level is included in a range equal to or less than the threshold upper limit and equal to or more than the threshold lower limit (step S18; No), the process from step S13 is repeated.

When the tower-bottom liquid level is greater than the threshold upper limit or the tower-bottom liquid level is less than the threshold lower limit (step S18; Yes), the control device 1 increases or decreases the set value of the inflow rate and the set value of the outflow rate of the absorbent solution to the regeneration tower 3 by a predetermined amount (step S19). For example, the control device 1 may have a control table in which the degree to which the set value of the inflow rate of the absorbent solution to the regeneration tower 3 is increased or decreased and the degree to which the set value of the outflow rate is increased or decreased are set in association with the degree to which the tower-bottom liquid level of the regeneration tower 3 exceeds the threshold upper limit or falls below the threshold lower limit, and increase or decrease the set value of the inflow rate or the set value of the outflow rate with reference to the control table. The increase or decrease of the set value may be performed only for one of the inflow rate or the outflow rate, or may be performed for both the inflow rate and the outflow rate. For example, when the tower-bottom liquid level is greater than the threshold upper limit, it is considered that the circulation flow rate of the absorbent solution in the thermosiphon section is large, and thus the control device 1 decreases the set value of the inflow rate or increases the set value of the outflow rate (or both). On the contrary, when the tower-bottom liquid level is less than the threshold lower limit, the control device 1 increases the set value of the inflow rate or decreases the set value of the outflow rate, or both. When the set value of the inflow rate and/or the outflow rate of the regeneration tower 3 is increased or decreased, the control device 1 repeats the process from step S13. Therefore, the tower-bottom liquid level of the regeneration tower 3 is controlled, for example, within the management target range.

### (Effects)

As described above, according to the third embodiment, the tower-bottom liquid level of the regeneration tower 3 can be stabilized by monitoring the tower-bottom liquid level of the regeneration tower 3 and controlling the opening u_{rich} of the rich solution control valve 61 and the opening uₗₑₐₙ of the lean solution control valve 62 such that the tower-bottom liquid level does not deviate from the management target range. For example, in the regeneration tower 3, the liquid level gauge 73 is originally provided in many cases, so that, according to the third embodiment, even in a case of the regeneration tower 3 including the thermosiphon section, the tower-bottom liquid level of the regeneration tower 3 can be stabilized without adding equipment or the like. The third embodiment may be used in combination with the second embodiment. The third embodiment can also be applied to a CO₂ recovery device in which a thermosiphon section does not have the piping structure described in the first embodiment.

### <Fourth Embodiment>

In the fourth embodiment, the control is performed to avoid a situation in which the tower-bottom liquid level of the regeneration tower 3 deviates from the management target range. Specifically, the inflow rate and the outflow rate of the regeneration tower 3 are increased or decreased by a certain amount at a plant operation load at which the installation height of the horizontal piping (the horizontal piping 333 in FIG. 2) of the thermosiphon section and the head (the liquid level on the inlet side) required for the formation of the thermosiphon are approximately the same. For example, while the CO₂ recovery device 100 is operating at an operation load at which the horizontal piping of the thermosiphon section and the liquid level on the inlet side are approximately the same, the set value of the inflow rate and the set value of the outflow rate are kept constant without being changed in accordance with the operation load, and the flow rate set value is discontinuously changed when the operation load is exceeded, thereby performing control to avoid an unstable state.

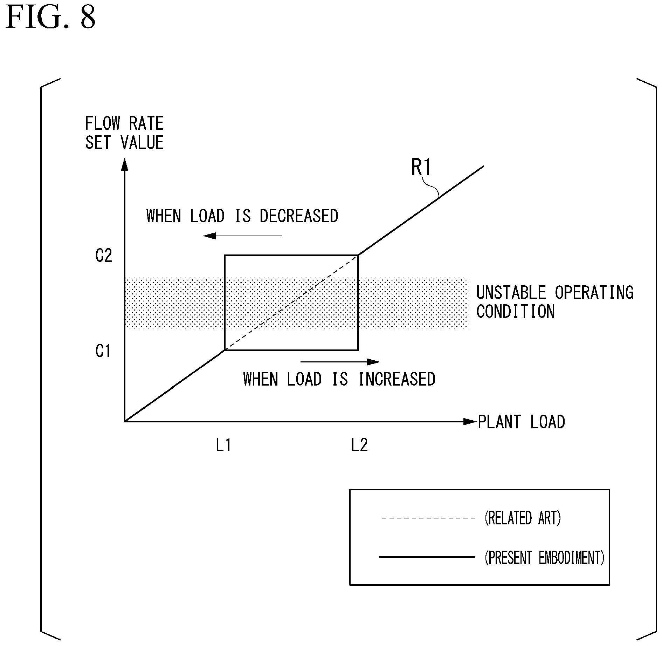

FIG. 8 shows a setting example of the flow rate set value in accordance with the plant operation load. In the graph of FIG. 8, a vertical axis represents the set value of the inflow rate or the outflow rate, a horizontal axis represents the operation load of the plant (CO₂ recovery device 100), and a line R1 represents the flow rate set value in accordance with the operation load. As shown in the drawing, when the operation load is outside a range of L1 to L2, the operation load and the flow rate set value are in a proportional relationship. The range of the operation load of L1 to L2 is a load range in which the liquid level on the inlet side of the thermosiphon section is at the same level as the horizontal piping, when the CO₂ recovery device 100 is operated with the flow rate set value based on the same proportional relationship as that outside the range of L1 to L2. In the fourth embodiment, when the operation load of the plant is in the range of L1 to L2, the set value of the inflow rate and/or the set value of the outflow rate is discontinuously changed to move the liquid level on the inlet side of the thermosiphon section away from the height of the horizontal piping. For example, when the operation load reaches L1 from a state in which the operation load is smaller than L1, the control device 1 maintains the flow rate set value at C1 based on the graph of FIG. 8. When the operation load of the plant reaches L2, the control device 1 discontinuously changes the flow rate set value from C1 to C2. For example, when the operation load reaches L2 from a state in which the operation load is larger than L2, the control device 1 maintains the flow rate set value at C2. When the operation load of the plant reaches L1, the control device 1 discontinuously changes the flow rate set value from C2 to C1. The range L1 to L2 of the operation load at which the flow rate set value is maintained is determined by preliminary calculation or trial operation. In this way, by changing the set value of the inflow rate or the set value of the outflow rate to avoid the liquid level on the inlet side of the thermosiphon section from being at the same level as the horizontal section, a situation is avoided in which the tower-bottom liquid level of the regeneration tower 3 is destabilized.

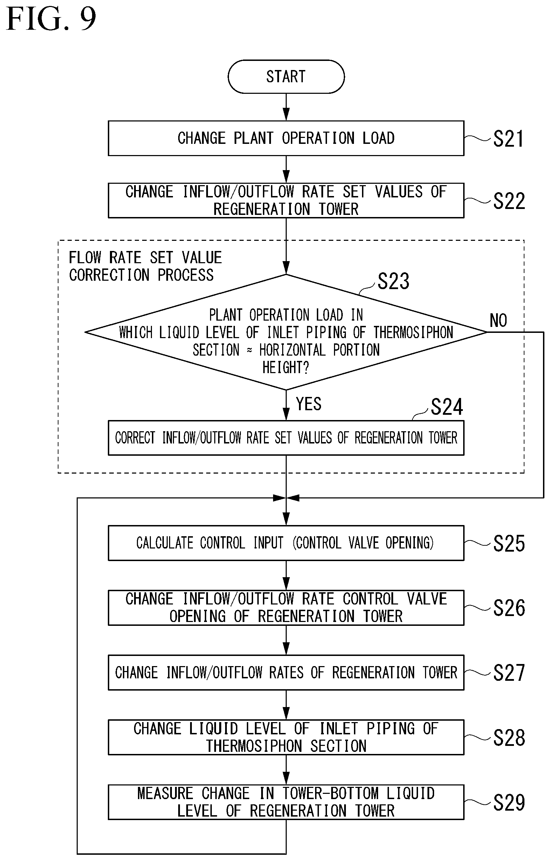

FIG. 9 shows an example of the control according to the fourth embodiment. The flowchart of FIG. 9 shows a flow of the control when the operation load of the CO₂ recovery device 100 is a value in an unsteady state.

First, the operation load of the plant (CO₂ recovery device) is changed (step S21). The set values of the inflow rate and the outflow rate of the absorbent solution in the regeneration tower 3 are changed in accordance with the change in the operation load (step S22). The control device 1 calculates the inflow rate of the absorbent solution into the regeneration tower 3 and the outflow rate of the absorbent solution from the regeneration tower 3 in accordance with the operation load after the change. Here, in the present embodiment, the correction process of the flow rate set value is performed. First, the control device 1 determines whether or not the operation load after the change is an operation load of the plant at which the liquid level of the inlet piping of the thermosiphon section and the height of the horizontal section of the thermosiphon section are substantially equal to each other (step S23). For example, the control device 1 has information shown in FIG. 8, and performs the determination by comparing L1 and L2 of the information with the operation load after the change. When the operation load of the plant is not an operation load at which the liquid level of the inlet piping of the thermosiphon section and the height of the horizontal section of the thermosiphon section are substantially equal to each other (step S23; No, when the operation load is not in the range of L1 to L2 in FIG. 8), the process proceeds to step S25. When the operation load after the change is included in the operation load under the above-described condition (step S23; Yes, when the operation load is in the range of L1 to L2 in FIG. 8), the control device 1 corrects the set values of the inflow rate and the outflow rate of the regeneration tower 3 (step S24). For example, in the example of FIG. 8, when the operation load is increased, the control device 1 maintains the flow rate set value at L1, and when the operation load is decreased, the control device 1 maintains the flow rate set value at L2. Next, the control device 1 calculates the control input in accordance with the change in the operation load (step S25). For example, the control device 1 calculates the opening u_{rich} of the rich solution control valve 61 and the opening uₗₑₐₙ of the lean solution control valve 62 in accordance with the operation load after the change, based on the set values of the inflow rate and the outflow rate calculated in step S22. In step S24, when the set value is corrected, the control device 1 calculates the opening u_{rich} and the opening uₗₑₐₙ corresponding to the corrected set value. The control device 1 calculates the rotational speeds of the pumps 21 and 35 in accordance with the changed operation load. Then, the valve opening of the inflow/outflow rate control valve of the regeneration tower 3 is changed (step S26). For example, the control device 1 controls the opening of each of the valves 61 and 62 to the opening u_{rich} of the rich solution control valve 61 and the opening uₗₑₐₙ of the lean solution control valve 62 calculated in step S25. The control device 1 operates the pumps 21 and 35 at the rotational speed calculated in step S25. Therefore, the inflow rate and the outflow rate of the regeneration tower 3 are changed (step S27). The liquid level of the inlet piping of the thermosiphon section is changed (step S28). The liquid level gauge 73 measures the tower-bottom liquid level of the regeneration tower 3 (step S29), and sends the measurement value to the control device 1. Then, the control device 1 repeatedly performs the process from step S25. For example, the control device 1 calculates the opening of the rich solution control valve 61 and the opening of the lean solution control valve 62 for bringing the tower-bottom liquid level close to the target value, in accordance with the difference between the measurement value of the tower-bottom liquid level of the regeneration tower 3 and the target value, and controls the valves 61 and 62 based on the calculation result. Therefore, the tower-bottom liquid level of the regeneration tower 3 is controlled, for example, within the management target range.

### (Effects)

According to the fourth embodiment, since the presence or absence of the liquid holdup of the horizontal piping of the thermosiphon section is continuously switched (there is no time slot in which the liquid level on the inlet side of the thermosiphon section is the same as the height of the horizontal piping, and the liquid level is continuously switched from H1 to H2 or from H2 to H1 in FIG. 2), it is possible to prevent the tower-bottom liquid level of the regeneration tower 3 from being in an unstable state. The fourth embodiment may be combined with the second embodiment and the third embodiment. The fourth embodiment can also be applied to a CO₂ recovery device in which a thermosiphon section does not have the piping structure described in the first embodiment.

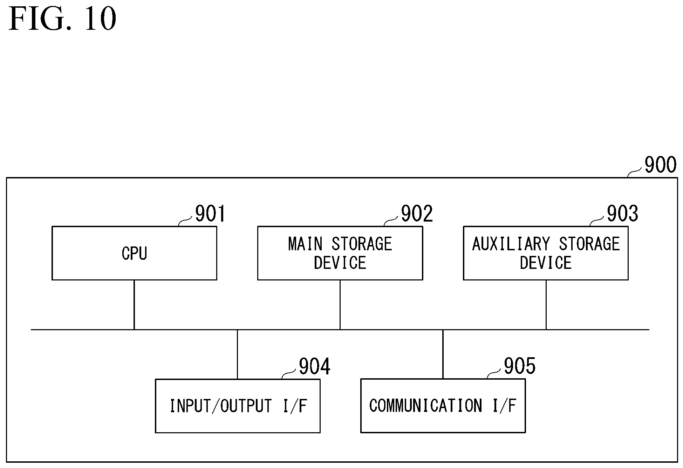

FIG. 10 is a diagram showing an example of a hardware configuration of a control device according to each embodiment. A computer 900 includes a CPU 901, a main storage device 902, an auxiliary storage device 903, an input/output interface 904, and a communication interface 905. The above-described control device 1 is mounted on the computer 900. Each of the functions described above is stored in the auxiliary storage device 903 in the form of a program. The CPU 901 reads out the program from the auxiliary storage device 903, loads the program into the main storage device 902, and executes the above-described process in accordance with the program. The CPU 901 secures a storage area in the main storage device 902 in accordance with the program. The CPU 901 secures a storage area for storing data being processed, in the auxiliary storage device 903 in accordance with the program.

A program for realizing all or a part of the functions of the control device 1 may be recorded on a computer-readable recording medium, and the program recorded on the recording medium may be read into a computer system and executed to perform the process by each functional unit. The term "computer system" includes an OS or hardware such as a peripheral device. The term "computer system" also includes a homepage providing environment (or display environment) when a WWW system is used. The term "computer-readable recording medium" refers to a portable medium such as a CD, a DVD, or a USB, or a storage device such as a hard disk built into a computer system. When the program is distributed to the computer 900 via a communication line, the computer 900 that receives the distribution may load the program into the main storage device 902 and execute the above-described process. Further, the above-described program may be a program for realizing a part of the above-described functions, and the above-described functions may be realized in combination with a program that has already been recorded in the computer system.

In another embodiment, the control device 1 may include a custom large scale integrated circuit (LSI) such as a programmable logic device (PLD), in addition to or instead of the above-described configuration. Exemplary examples of the PLD include a programmable array logic (PAL), a generic array logic (GAL), a complex programmable logic device (CPLD), and a field programmable gate array (FPGA).

In this case, a part or all of the functions realized by a processor may be realized by an integrated circuit.

As described above, some embodiments according to the present disclosure have been described, but all of these embodiments are presented as examples, and are not intended to limit the scope of the invention. These embodiments can be implemented in various other forms, and various omissions, replacements, and modifications can be made without departing from the gist of the invention. These embodiments and modifications thereof are included in the scope and gist of the invention, and are also included in the invention described in the claims and the scope of equivalents thereof.

### <Supplementary Note>

The regeneration tower, the control device, and the control method described in each of the embodiments are understood as follows, for example.
(1) A first aspect relates to a regeneration tower of a CO₂ recovery device, including: a first regeneration section configured to store an absorbent solution supplied to the regeneration tower from an absorption tower of the CO₂ recovery device and a second regeneration section provided below the first regeneration section; and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and in the piping that constitutes the thermosiphon section, the volume of piping arranged in a horizontal direction and provided within a range in which a liquid level of the absorbent solution fluctuates in piping arranged in a liquid-phase portion upstream of the heat exchanger is smaller than the volume by which the absorbent solution stored in the second regeneration section is permitted to fluctuate.
   Therefore, it is possible to stabilize the control of the CO₂ recovery device by suppressing the liquid level fluctuation of the regeneration tower provided with the thermosiphon section.
(2) A second aspect relates to the regeneration tower according to (1), in which the piping arranged in the horizontal direction is not provided within the range in which the liquid level of the absorbent solution fluctuates.
   As a result, temporarily stopping of the change in the circulation flow rate of the absorbent solution in the thermosiphon section is avoided, and the control of the CO₂ recovery device can be stabilized without generating the dead time in the control.
(3) A third aspect relates to the regeneration tower according to (2), in which piping is arranged in a vertical direction or in a direction inclined with respect to the vertical direction, as the piping constituting the thermosiphon section, within the range in which the liquid level of the absorbent solution fluctuates.
   Therefore, temporarily stopping of the change in the circulation flow rate of the absorbent solution in the thermosiphon section is avoided, and the control of the CO₂ recovery device can be stabilized without generating the dead time in the control.
(4) A fourth aspect relates to a control device of a CO₂ recovery device including the regeneration tower according to (1) to (2), and an absorption tower, in which based on a first model representing a relationship among fluctuation of a liquid level in the thermosiphon section, a first flow rate that is the flow rate of the absorbent solution supplied from the absorption tower to the regeneration tower and that is based on a valve opening of a first flow rate control valve configured to control the first flow rate, and a circulation flow rate of the absorbent solution that flows through the thermosiphon section, and a second model representing a relationship among fluctuation of a tower-bottom liquid level that is a liquid level of the absorbent solution stored in the second regeneration section, a second flow rate that is the flow rate of the absorbent solution supplied from the regeneration tower to the absorption tower and that is based on a valve opening of a second flow rate control valve configured to control the second flow rate, and the circulation flow rate, the control device calculates the valve opening of the first flow rate control valve and the second flow rate control valve that optimize the liquid level in the thermosiphon section such that the tower-bottom liquid level is maintained constant. Therefore, the tower-bottom liquid level of the regeneration tower can be stabilized.
(5) A fifth aspect relates to a control device of a CO₂ recovery device including the regeneration tower according to (1) to (2), and an absorption tower, in which when a measurement value of the liquid level in the second regeneration section exceeds a predetermined threshold value, the control device decreases a valve opening of the first flow rate control valve by a first predetermined amount and/or increases a valve opening of the second flow rate control valve by a second predetermined amount, and when the measurement value of the liquid level in the second regeneration section falls below the predetermined threshold value, the control device increases the valve opening of the first flow rate control valve by a third predetermined amount and/or decreases the valve opening of the second flow rate control valve by a fourth predetermined amount. Therefore, the tower-bottom liquid level of the regeneration tower can be stabilized.
(6) A sixth aspect relates to a control device of a CO₂ recovery device including the regeneration tower according to (1) to (2), and an absorption tower, in which when an operation load of the CO₂ recovery device falls within a predetermined range in which the liquid level of the absorbent solution in the piping arranged in the liquid-phase portion upstream of the heat exchanger is assumed to be the same as a height of an arrangement position of the piping arranged in the horizontal direction and constituting the thermosiphon section, the control device does not change valve opening of a first flow rate control valve configured to control the flow rate of the absorbent solution supplied from the absorption tower to the regeneration tower and a second flow rate control valve configured to control the flow rate of the absorbent solution supplied from the regeneration tower to the absorption tower.
   Therefore, the tower-bottom liquid level of the regeneration tower can be stabilized.
(7) A seventh aspect relates to a control method of a CO₂ recovery device including a regeneration tower including a first regeneration section configured to store an absorbent solution supplied to the regeneration tower from an absorption tower of the CO₂ recovery device and a second regeneration section provided below the first regeneration section, and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and the absorption tower, the control method including: based on a first model representing a relationship among fluctuation of a liquid level in the thermosiphon section, a first flow rate that is the flow rate of the absorbent solution supplied from the absorption tower to the regeneration tower and that is based on a valve opening of a first flow rate control valve configured to control the first flow rate, and a circulation flow rate of the absorbent solution that flows through the thermosiphon section, and a second model representing a relationship among fluctuation of a tower-bottom liquid level that is a liquid level of the absorbent solution stored in the second regeneration section, a second flow rate that is the flow rate of the absorbent solution supplied from the regeneration tower to the absorption tower and that is based on a valve opening of a second flow rate control valve configured to control the second flow rate, and the circulation flow rate, calculating the valve opening of the first flow rate control valve and the second flow rate control valve that optimize the liquid level in the thermosiphon section such that the tower-bottom liquid level is maintained constant, and controlling the first flow rate control valve and the second flow rate control valve with the calculated valve opening.
(8) An eighth aspect relates to a control method of a CO₂ recovery device including a regeneration tower including a first regeneration section configured to store an absorbent solution supplied to the regeneration tower from an absorption tower of the CO₂ recovery device and a second regeneration section provided below the first regeneration section, and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and the absorption tower, the control method including: when a measurement value of a liquid level of the absorbent solution stored in the second regeneration section exceeds a predetermined threshold value, decreasing a valve opening of a first flow rate control valve configured to control the flow rate of the absorbent solution supplied from the absorption tower to the regeneration tower by a first predetermined amount and/or increasing a valve opening of a second flow rate control valve configured to control the flow rate of the absorbent solution supplied from the regeneration tower to the absorption tower by a second predetermined amount, and when the measurement value of the liquid level of the absorbent solution stored in the second regeneration section falls below the predetermined threshold value, increasing the valve opening of the first flow rate control valve by a third predetermined amount and/or decreasing the valve opening of the second flow rate control valve by a fourth predetermined amount.
(9) A ninth aspect relates to a control method of a CO₂ recovery device including a regeneration tower including a first regeneration section configured to store an absorbent solution supplied to the regeneration tower from an absorption tower of the CO₂ recovery device and a second regeneration section provided below the first regeneration section, and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and the absorption tower, the control method including: when an operation load of the CO₂ recovery device falls within a predetermined range in which a liquid level of the absorbent solution in piping arranged in a liquid-phase portion upstream of the heat exchanger is assumed to be the same as a height of an arrangement position of piping arranged in a horizontal direction and constituting the thermosiphon section, not changing valve opening of a first flow rate control valve configured to control the flow rate of the absorbent solution supplied from the absorption tower to the regeneration tower and a second flow rate control valve configured to control the flow rate of the absorbent solution supplied from the regeneration tower to the absorption tower.

### INDUSTRIAL APPLICABILITY

With the regeneration tower, the control device, and the control method described above, it is possible to stabilize the control of the CO₂ recovery device including the regeneration tower provided with the thermosiphon section.

### REFERENCE SIGNS LIST

1 Control device
2 Absorption tower
3 Regeneration tower
4 Heat exchanger
21 Pump
31 First regeneration section
32 Second regeneration section
33, 331, 332, 333, 334, 335, 336, 337 Pipe
34 Heat exchanger
35 Pump
51, 52, 53, 54 Pipe
61 Rich solution control valve
62 Lean solution control valve
71, 72 Flow meter
73 Liquid level gauge
100 CO₂ recovery device
900 Computer
901 CPU
902 Main storage device
903 Auxiliary storage device
904 Input/output interface
905 Communication interface

## Claims

1. A regeneration tower of a CO₂ recovery device, comprising:
a first regeneration section configured to store an absorbent solution supplied to the regeneration tower from an absorption tower of the CO₂ recovery device and a second regeneration section provided below the first regeneration section; and
a thermosiphon section that is piping connected from a lower portion of the first regeneration section to an upper portion of the second regeneration section via a heat exchanger,
wherein the absorbent solution is supplied from the first regeneration section to the second regeneration section through the thermosiphon section, and
in the piping that constitutes the thermosiphon section, a volume of piping arranged in a horizontal direction and provided within a range in which a liquid level of the absorbent solution fluctuates in piping arranged in a liquid-phase portion upstream of the heat exchanger is smaller than a volume by which the absorbent solution stored in the second regeneration section is permitted to fluctuate.

2. The regeneration tower according to Claim 1,
wherein the piping arranged in the horizontal direction is not provided within the range in which the liquid level of the absorbent solution fluctuates.

3. The regeneration tower according to Claim 2,
wherein piping is arranged in a vertical direction or in a direction inclined with respect to the vertical direction, as the piping constituting the thermosiphon section, within the range in which the liquid level of the absorbent solution fluctuates.

4. A control device of a CO₂ recovery device including the regeneration tower according to Claim 1 or 2, and an absorption tower,
wherein based on a first model representing a relationship among fluctuation of a liquid level in the thermosiphon section, a first flow rate that is a flow rate of the absorbent solution supplied from the absorption tower to the regeneration tower and that is based on a valve opening of a first flow rate control valve configured to control the first flow rate, and a circulation flow rate of the absorbent solution that flows through the thermosiphon section, and a second model representing a relationship among fluctuation of a tower-bottom liquid level that is a liquid level of the absorbent solution stored in the second regeneration section, a second flow rate that is a flow rate of the absorbent solution supplied from the regeneration tower to the absorption tower and that is based on a valve opening of a second flow rate control valve configured to control the second flow rate, and the circulation flow rate, the control device calculates the valve opening of the first flow rate control valve and the second flow rate control valve that optimize the liquid level in the thermosiphon section such that the tower-bottom liquid level is maintained constant.

5. A control device of a CO₂ recovery device including the regeneration tower according to Claim 1 or 2, and an absorption tower,
wherein when a measurement value of the liquid level in the second regeneration section exceeds a predetermined threshold value, the control device decreases a valve opening of a first flow rate control valve configured to control a flow rate of the absorbent solution supplied from the absorption tower to the regeneration tower by a first predetermined amount and/or increases a valve opening of a second flow rate control valve configured to control a flow rate of the absorbent solution supplied from the regeneration tower to the absorption tower by a second predetermined amount, and
when the measurement value of the liquid level in the second regeneration section falls below the predetermined threshold value, the control device increases the valve opening of the first flow rate control valve by a third predetermined amount and/or decreases the valve opening of the second flow rate control valve by a fourth predetermined amount.

6. A control device of a CO₂ recovery device including the regeneration tower according to Claim 1 or 2, and an absorption tower,
wherein when an operation load of the CO₂ recovery device falls within a predetermined range in which the liquid level of the absorbent solution in the piping arranged in the liquid-phase portion upstream of the heat exchanger is assumed to be the same as a height of an arrangement position of the piping arranged in the horizontal direction and constituting the thermosiphon section, the control device does not change valve opening of a first flow rate control valve configured to control a flow rate of the absorbent solution supplied from the absorption tower to the regeneration tower and a second flow rate control valve configured to control a flow rate of the absorbent solution supplied from the regeneration tower to the absorption tower.

7. A control method of a CO₂ recovery device including a regeneration tower including a first regeneration section configured to store an absorbent solution supplied to the regeneration tower from an absorption tower of the CO₂ recovery device and a second regeneration section provided below the first regeneration section, and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and the absorption tower, the control method comprising:
based on a first model representing a relationship among fluctuation of a liquid level in the thermosiphon section, a first flow rate that is a flow rate of the absorbent solution supplied from the absorption tower to the regeneration tower and that is based on a valve opening of a first flow rate control valve configured to control the first flow rate, and a circulation flow rate of the absorbent solution that flows through the thermosiphon section, and a second model representing a relationship among fluctuation of a tower-bottom liquid level that is a liquid level of the absorbent solution stored in the second regeneration section, a second flow rate that is a flow rate of the absorbent solution supplied from the regeneration tower to the absorption tower and that is based on a valve opening of a second flow rate control valve configured to control the second flow rate, and the circulation flow rate, calculating the valve opening of the first flow rate control valve and the second flow rate control valve that optimize the liquid level in the thermosiphon section such that the tower-bottom liquid level is maintained constant, and controlling the first flow rate control valve and the second flow rate control valve with the calculated valve opening.

8. A control method of a CO₂ recovery device including a regeneration tower including a first regeneration section configured to store an absorbent solution supplied to the regeneration tower from an absorption tower of the CO₂ recovery device and a second regeneration section provided below the first regeneration section, and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and the absorption tower, the control method comprising:
when a measurement value of a liquid level of the absorbent solution stored in the second regeneration section exceeds a predetermined threshold value, decreasing a valve opening of a first flow rate control valve configured to control a flow rate of the absorbent solution supplied from the absorption tower to the regeneration tower by a first predetermined amount and/or increasing a valve opening of a second flow rate control valve configured to control a flow rate of the absorbent solution supplied from the regeneration tower to the absorption tower by a second predetermined amount, and
when the measurement value of the liquid level of the absorbent solution stored in the second regeneration section falls below the predetermined threshold value, increasing the valve opening of the first flow rate control valve by a third predetermined amount and/or decreasing the valve opening of the second flow rate control valve by a fourth predetermined amount.

9. A control method of a CO₂ recovery device including a regeneration tower including a first regeneration section configured to store an absorbent solution supplied to the regeneration tower from an absorption tower of the CO₂ recovery device and a second regeneration section provided below the first regeneration section, and a thermosiphon section that is piping connected from a lower portion of the first regeneration section to an upper portion of the second regeneration section via a heat exchanger, in which the absorbent solution is supplied from the first regeneration section to the second regeneration section through the thermosiphon section, and the absorption tower, the control method comprising:
when an operation load of the CO₂ recovery device falls within a predetermined range in which a liquid level of the absorbent solution in piping arranged in a liquid-phase portion upstream of the heat exchanger is assumed to be the same as a height of an arrangement position of piping arranged in a horizontal direction and constituting the thermosiphon section, not changing valve opening of a first flow rate control valve configured to control a flow rate of the absorbent solution supplied from the absorption tower to the regeneration tower and a second flow rate control valve configured to control a flow rate of the absorbent solution supplied from the regeneration tower to the absorption tower.
